# EUROPEAN PATENT SPECIFICATION

(11) **EP 1 594 258 B1**
(45) Date of publication and mention of the grant of the patent: **13.10.2010**
(21) Application number: 03815517.2
(22) Date of filing: 13.08.2003
(51) Int. Cl.: H04L 12/46, H04L 12/28

(54) **METHOD AND SYSTEM FOR RECEIVING AND TRANSMITTING DIFFERENT DATA FRAMES ON DIGITAL TRANSMISSION NETWORK**
VERFAHREN UND SYSTEM ZUM EMPFANGEN UND SENDEN VERSCHIEDENER DATENRAHMEN IN EINEM DIGITALEN ÜBERTRAGUNGSNETZ
PROCEDE ET SYSTEME PERMETTANT DE RECEVOIR ET D'EMETTRE DIVERSES TRAMES DE DONNEES SUR UN RESEAU D'EMISSION NUMERIQUE

(30) Priority: 28.01.2003 CN 03103918
(43) Date of publication of application: 09.11.2005
(73) Proprietor: Huawei Technologies Co., Ltd., Shenzhen, Guangdong 518057 (CN)
(72) Inventor: HE, Zhiqun; I.P. Dept. Huawei Service Center Bldg., Guangdong 518057 (CN); WANG,Yuxiang I.P. Dept. Huawei Service Center Bldg, Guangdon 518057 (CN); QIAO, Qian; I.P. Dept. Huawei Service Center Bldg., Guangdong 518057 (CN)
(74) Representative: Reinhard - Skuhra - Weise & Partner GbR
(86) International application number: PCT/CN2003/000677
(87) International publication number: WO 2004/068791

(56) References cited:
- EP-A- 0 512 495
- EP-A- 0 996 257
- EP-A- 1 229 689
- EP-A- 1 246 408
- EP-A- 1 246 413
- CN-A- 1 356 806
- CN-A- 1 376 348
- US-A- 2002 086 705
- US-A1- 2001 002 909
- US-A1- 2002 089 992
- US-A1- 2002 091 795

## Description

### Field of the Invention

The present invention relates to a system and method for data frames access and transport, in particular to a system and method for different data frames access and transport over a digital transport network.

### Background of the Invention

Because Ethernet technology is featured with low price and high expansibility, etc., it has evolved from a mainstream LAN technology to a primary data service access technology and is widely used in Metropolitan Area Network (MAN) by more and more telecom operators. Providing Ethernet data services has becoming a trend for telecom operators. Ethernet data services can be classified into two types: Ethernet private line services and Virtual Local Area Network (VLAN) services.

For convenience, the phrases and abbreviations in the following description have the following meanings: MPLS - Multi-protocol Label Switching; GFP - Generic Framing Procedure; VLAN - virtual Local Area Network; VMAN - virtual Metropolitan Area Network; RPR - Resilient Packet Ring.

Currently, most of the telecom operators' data transmission networks are SDH/SONET networks. Therefore, it is a highlight for telecom operators and telecom equipment manufacturers to access and transfer Ethernet data frames effectively in a SDH/SONET network to meet the increasing demand for Ethernet data services. At present, several telecom equipment manufacturers have provided the devices to access and transfer Ethernet data frames in a SDH/SONET network, and those devices may be classified into 3 types according to the implementation approach of functionality:
(1)Data mapping and de-mapping scheme;
(2)Bridge scheme;
(3)RPR scheme.

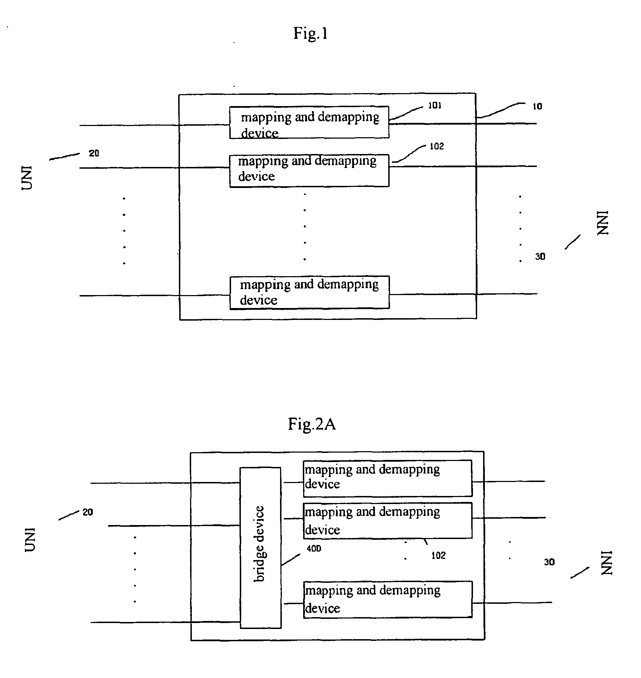

Fig.1 shows a block diagram of device according to the data mapping and de-mapping scheme in the first prior art. The device comprises one or more User-Network Interfaces (UNI) 20 (standard Ethernet interfaces), one or more Network-Network Interfaces (NNI) 30 (synchronous digital transmission channels), one or more mapping and de-mapping devices 101, 102, ..., each of which corresponds to a unique UNI and a unique NNI. Wherein, the data frames entering the device via UNI 20 and data frames output from the device comply with Ethernet data standard; data frames entering the device via NNI 30 and data frame output from the device comply with synchronous digital transport network standard.

Wherein the mapping and de-mapping device 10 maps Ethernet data frames entering the device via UNI 20 to become synchronous digital data frames, and outputs the mapped data frames via NNI 30; the mapping and de-mapping device 10 de-maps the synchronous digital data entering the device via NNI to Ethernet data frames, and outputs the data frames via the UNI. However, the functionality of the device is simple, thus it can only provide Ethernet private line services.

Fig.2A shows a block diagram of the device utilizing bridge scheme in the second prior art. The device comprises one or more UNIs 20 (standard Ethernet interfaces), each of which corresponds to a unique bridge port. The device further comprises one or more NNIs 30 (synchronous digital transmission channels). The device further comprises a bridge device 400 (described in detail in IEEE802.1D and IEEE802.1Q), wherein the bridge device 400 comprises a plurality of bridge ports, each of which corresponds to a unique UNI or a unique mapping and de-mapping device. Each mapping and de-mapping device corresponds to a unique bridge port and a unique NNI. Wherein, the data frames entering the device via UNI 20 and the data frames output from the device comply with Ethernet data standard; data frames entering the device from NNI 30 and data frame output from the device comply with the standard of synchronous digital transport network.

Data frames entering the device via UNI 20 enter the bridge device 400 via the bridge port corresponding to the UNI; the bridge device 400 calculates the bridge output port according to the address information in the data frames and sends the data frames to the corresponding mapping and de-mapping device 102 (the mapping and de-mapping device maps the data frames and then outputs them to the NNI) via the output port, and vice versa.

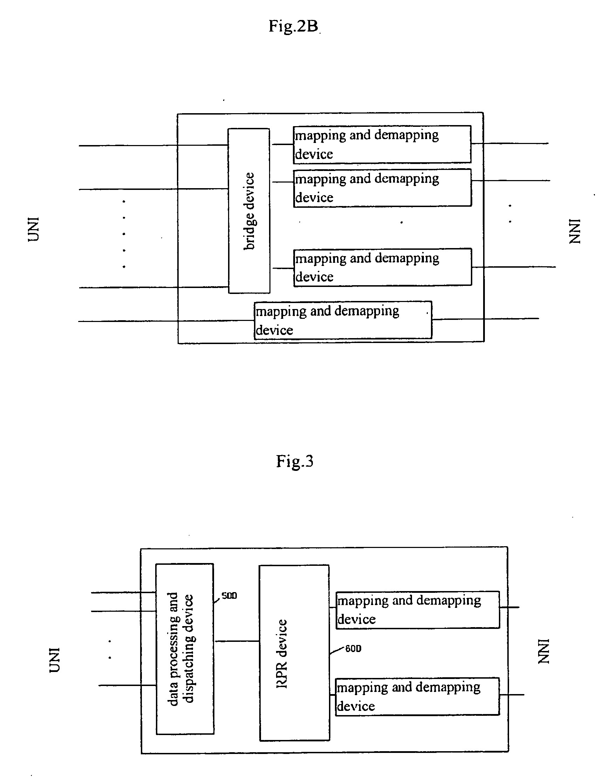

In the bridge scheme, usually the operator is allowed to map partial or all UNIs to mapping and de-mapping devices in a one to one way through configuration. In this case, the device employs both of above technical schemes, so it is called an enhanced bridge scheme. The functional model of an enhanced bridge device is shown in Fig.2B.

The disadvantage of the second prior art is:
(1) It is unable to provide integral VLAN service. If a plurality of users are attached to the device via UNIs and there are conflicts among address spaces of Ethernet data frames of those users, the device is unable to isolate the conflicts effectively, thus it is unable to provide services correctly to those users.
(2) A common bridge (non-enhanced bridge) is unable to provide Ethernet private line service.
(3) A UNI can only support one service type (Ethernet private line service or VLAN service), which limits the access capability of the device. In some cases, though the processing capacity of the device is still sufficient enough, new devices have to be added to improve access capacity because the UNIs have been used up.
(4) A NNI can only support one service type (Ethernet private line service or VLAN service), which leads to low convergence capability of the device. In some cases, in a star topology network, though the processing capacity of the device is still sufficient enough, new devices have to be added to improve convergence capacity because the NNIs have been used up. For operators, it means not only new investment but also bandwidth waste.

Fig.3 shows a block diagram of the device utilizing RPR scheme in the third prior art. The device comprises one or more UNIs (standard Ethernet UNIs), two NNIs (synchronous digital transmission channels), and a RPR device 600 (described in IEEE802.17), two mapping and de-mapping devices, and a data processing device 500 which may be a data converging/de-converging device or a bridge device).

Wherein the data frames entering the device via the UNI 20 are processed as follows:
Step 1: the data processing device 500 processes the data frames (the data frames are converged if the data processing device is a data converging/de-converging device; the data frames are switched if the data processing device is a bridge device);
Step 2: the data processing device 500 transfers the processed data frames to the RPR device 600;
Step 3: the RPR device 600 sends the data frames to the corresponding mapping and de-mapping device according to the address information in the data frames;
Step 4: the mapping and de-mapping device maps performs mapping operation for the data frames and sends them to outside of the device via the corresponding NNI.

The data frames entering the device via the NNI are processed as follows:
Step 1: the mapping and de-mapping device performs de-mapping operation for the data frames and transfers the de-mapped data frames to the RPR device 600;
Step 2: the RPR device 600 processes the data frames and then sends them to the data processing device;
Step 3: the data processing device 500 processes the data frames (the data frames are de-converged if the data processing device is a data converging/de-converging device; the data frames are switched if the data processing device is a bridge device);
Step 4: the data processing device 500 finds corresponding UNI according to the address information in the data frames and then outputs the data frames via the UNI.

The disadvantages of said scheme are:
(1) It is unable to provide Ethernet private line service and VLAN service at the same time. If the data processing device is a bridge device, it doesn't support Ethernet private line service; if the data processing device is a data converging/de-converging device, it doesn't support VLAN service.
(2) It can only be used in a ring topology network.

### Summary of the Invention

An object of the present invention is to provide a virtual bridge device over a digital transport network and a method for accessing and transporting data frames, in order to solve the problem of limitation of address space of data frames.

According to one aspect of the present invention, it is provided a system for different data frames access and transport over a digital transport network for accessing and transporting different data frames, comprising: at least one User-Network Interface, which is used to couple with the user's network; and/or at least one Network-Network Interface, which is used to couple with said digital transport network to transmit data; and a data converting device, which is coupled with said User-Network Interfaces and said Network-Network Interfaces to convert data formats between said User Network Interfaces, or data formats between said Network-Network Interfaces, or data formats between said Network-Network Interfaces and said User-Network Interfaces, wherein said data converting device comprises a virtual bridge device and an interface device, said virtual bridge device exchanges data frames between said User-Network Interfaces and (Network-Network Interfaces via said interface device, said virtual bridge device is used to detect control messages and transfers the control messages to an external control system of the data converting device via a control interface unit, and to perform exchanging on data frames in non-control messages; wherein said virtual bridge device comprises: an inter-device interface, for inputting and outputting data frames; a virtual bridge processing unit, which is coupled to the inter-device interface to process data frames; databases, which store information corresponding to classes of data and are coupled to said virtual bridge processing unit to process data frames according to said information; the control interface unit, which is coupled to said databases and said virtual bridge processing unit, and used to control said virtual bridge processing unit and said databases wherein said databases comprise a virtual bridge database, a multicasting database, and a forwarding database; said multicasting database and said forwarding database storing virtual bridge number, input port number of the virtual bridge, an input destination address, an input VLAN number, an input VMAN number, an output port number of the virtual bridge; said virtual bridge database storing an input class number, a virtual bridge number, a port number and an output class number.

Preferably, said data converting device comprises a data processing and dispatching device or a virtual interface device, said inter-device interface being connected with said data processing and dispatching device or said virtual interface device.

Preferably, said control interface unit provides a control interface, performs adding, deleting, modifying, and searching operations on contents in said databases; and monitors the working status of the virtual bridge processing unit via said control interface.

Preferably, said virtual bridge processing unit processes data frames according to fixed logics, controls the format of forwarding items in the forwarding database and the format of multicasting items in the multicasting database, and controls the format of items in the virtual bridge database.

The present invention also provides a method for data frames access and transport over a digital transport network using the system for different data frames access and transport over a digital transport network according to claim 1, said system comprising a virtual bridge device, said method comprising the following steps:
extracting an input data class number and a destination address from the data frames;
searching in the virtual bridge database according to said class number for extracting the virtual bridge number and a virtual bridge port number;
switching the data frames according to the virtual bridge number, the virtual bridge port number and the destination address, thereby modifying the data frames, and sending data
frames via the inter-device interface.

Preferably, said step of extracting the input data class number, destination address from the data frames further comprises: extracting the input data source address and the VLAN number.

Preferably, said method further comprising: learning the source address and updating the forwarding data base according to the learning result; wherein the step of switching comprises: searching in the forwarding database with the index of the virtual bridge number, the virtual bridge input, port number, destination address and VLAN number for extracting an output port number for the data frames; executing a multicasting sub-flow when the destination address is a multicasting address; executing a broadcasting sub-flow when the destination address is a broadcasting address.

Preferably, said step of modifying the data frames, and sending said data frames via the inter-device interface comprises: searching in the virtual bridge database with the index of the virtual bridge number and the extracted output port number for the data frames; extracting an output class number from the search result and modifying the data frames by replacing the class number in the data frames with the output data class number; outputting the modified data frames to external of the virtual bridge device via the inter-device interface.

Preferably, said broadcasting sub-flow comprises: searching in the virtual bridge database with the keyword of the virtual bridge number; comparing the input class number in the search result with the class number in the data frames; copying the data frames when the input class number in the search result is different from the class number in the data frames, extracting the output class number from the search result, and modifying the copied data frames by replacing the class number in the copied data frames with the output data class number; and outputting the modified copied data frames to the external of the virtual bridge device via the inter-device interface.

Preferably, said multicasting sub-flow comprises: searching in the multicasting database with the keywords of the virtual bridge number, the virtual bridge input port number, the destination address and the VLAN number; comparing the output port number in the search result with the extracted input port number, i.e., the input port number corresponding to the class number of data frames in the virtual bridge database; searching in the virtual bridge database with the keywords of the virtual bridge number and output port number when the output port number is not equal to the extracted input port number; and copying the data frames, extracting the output class number from the searched result, modifying the copied data frames by replacing the class number in the copied data frames with the output data class number, and outputting the modified copied data frames via the inter-device interface.

### Brief Description of the Drawings

Fig.1 is the block diagram of the data mapping and de-mapping scheme according to the first prior art;
Fig.2A is the block diagram of the bridge scheme according to the second prior art;
Fig.2B is the block diagram of the enhanced bridge scheme according to the second prior art;
Fig.3 is the block diagram of RPR scheme according to the third prior art;
Fig.4 is the schematic diagram of a preferred embodiment of the system for Ethernet data frames access and transport over a SDH/SONET network according to the present invention;
Fig.4 (F) is the data processing flowchart according to a preferred embodiment of the system for Ethernet data frames access and transport over a SDH/SONET network of the present invention;

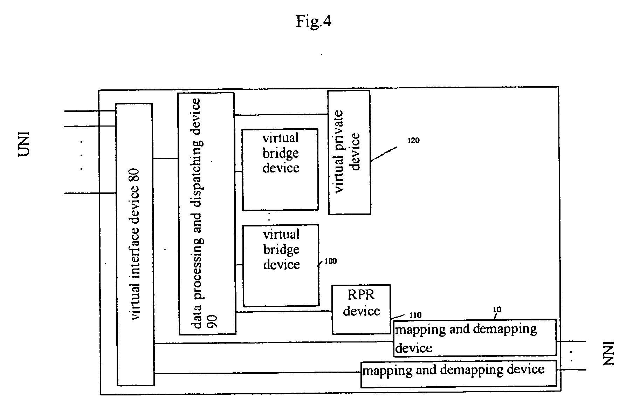

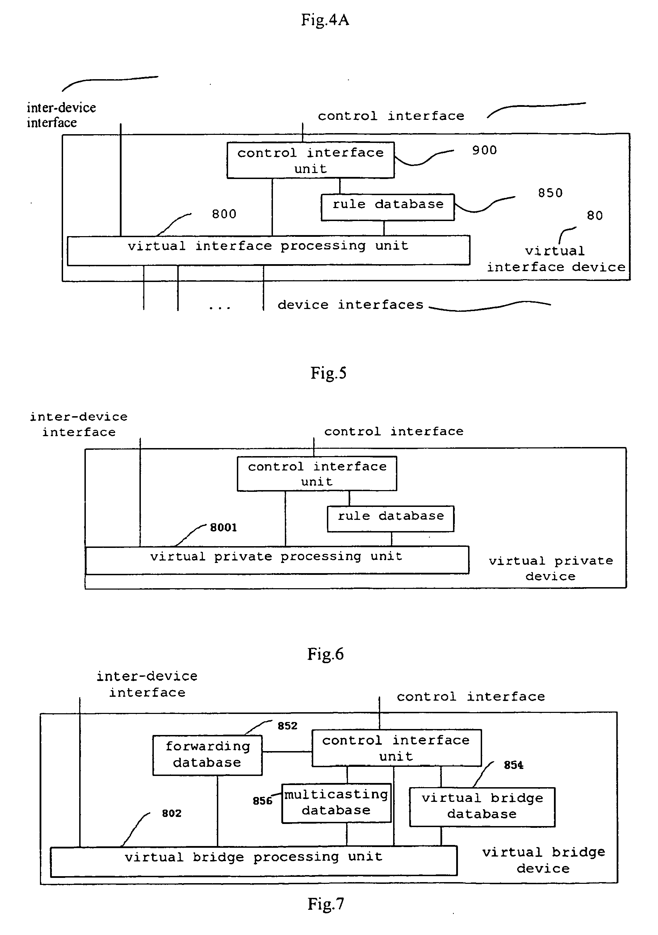

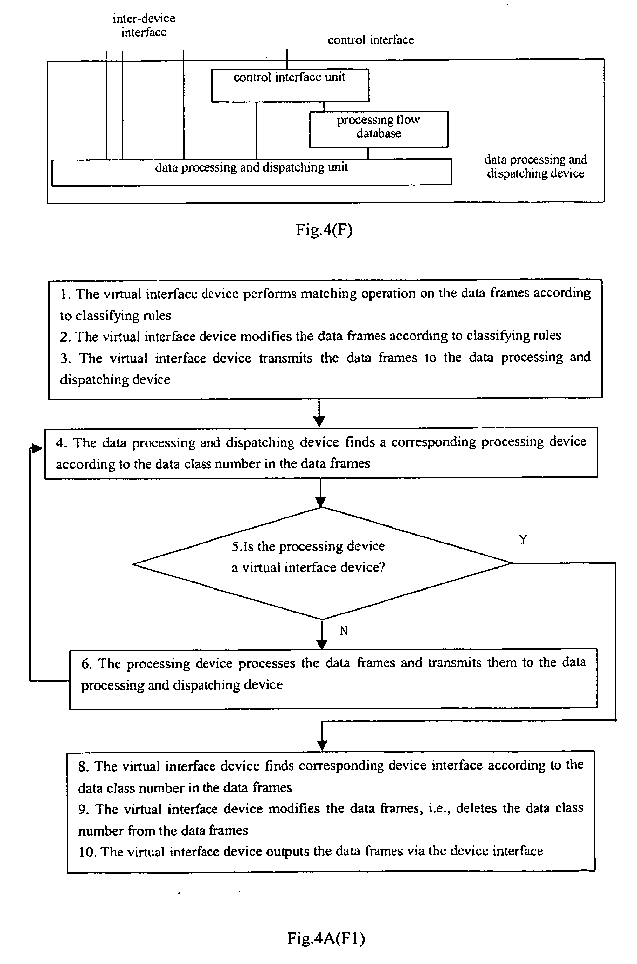

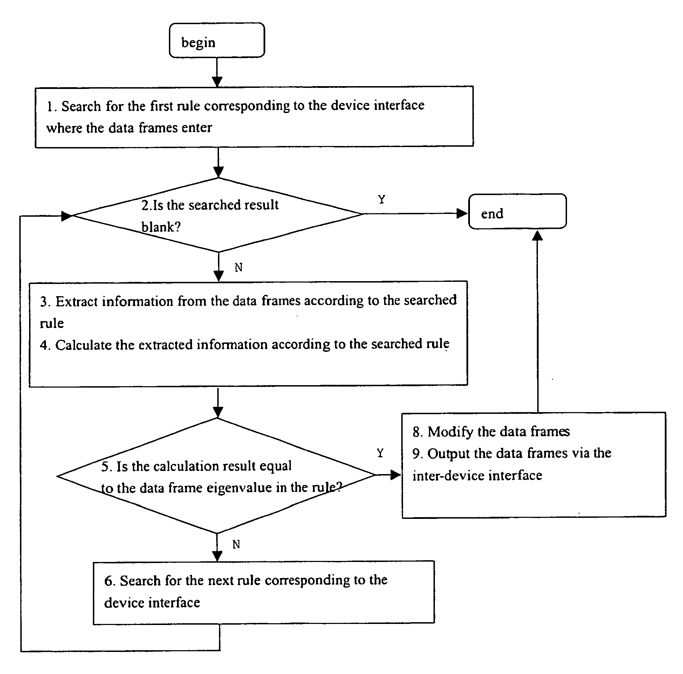

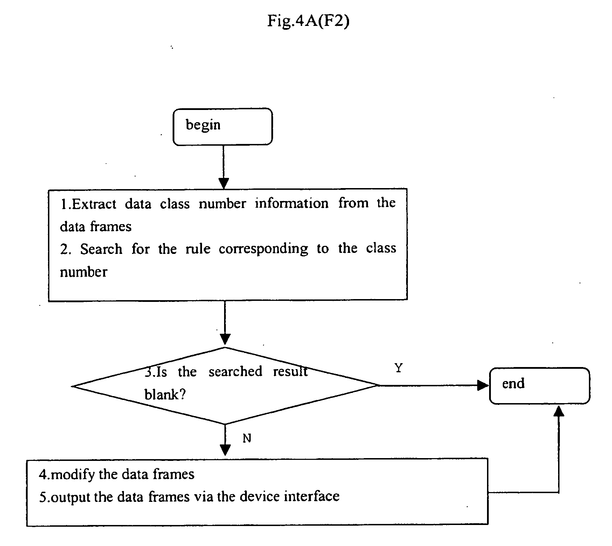

Fig.4A is the schematic block diagram of virtual interface device according to a preferred embodiment of the system for Ethernet data frames access and transport over a SDH/SONET network according to the present invention;
Fig. 4A (F1) is the flowchart of the virtual interface device processing the incoming data from a device interface according to a preferred embodiment of the system for Ethernet data frames access and transport over a SDH/SONET network of the present invention;
Fig.4A (F2) is the flowchart of the virtual interface device processing the incoming data from the inter-device interface according to a preferred embodiment of the system for Ethernet data frames access and transport over a SDH/SONET network of the present invention;

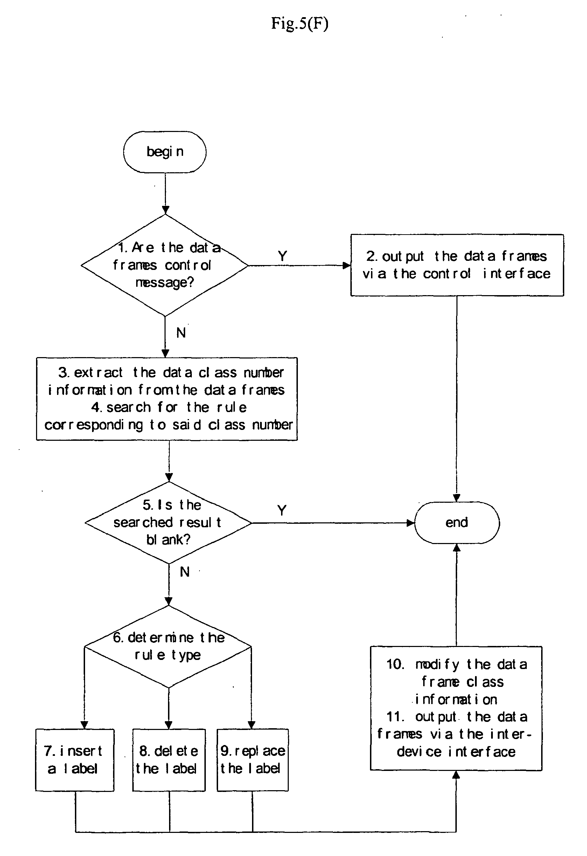

Fig.5 is the schematic block diagram of the virtual private device according to a preferred embodiment of the system for Ethernet data frames access and transport over a SDH/SONET network of the present invention;
Fig.5 (F) is the flowchart of the virtual private device processing the incoming data from the inter-device interface according to a preferred embodiment of the system for Ethernet data frames access and transport over a SDH/SONET network of the present invention;

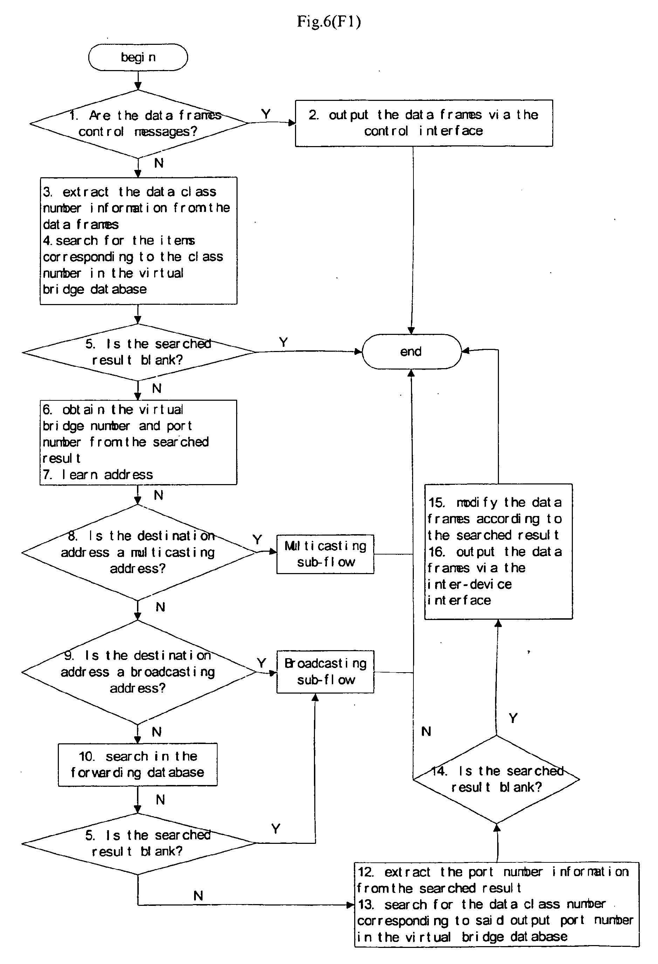

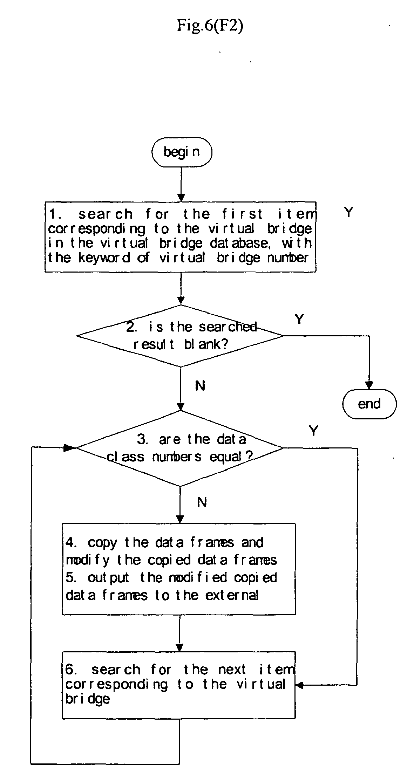

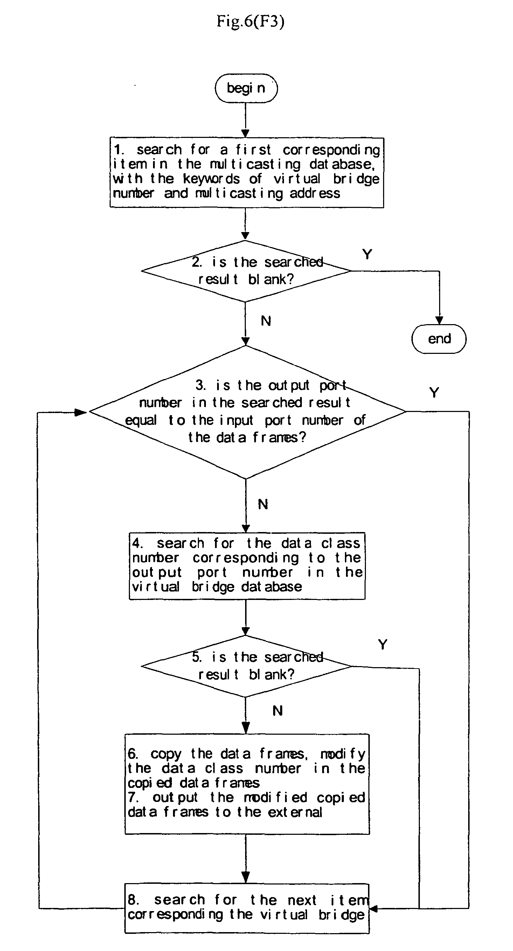

Fig.6 is the schematic block diagram of the virtual bridge device according to a preferred embodiment of the system for Ethernet data frames access and transport over a SDH/SONET network of the present invention;
Fig.6 (F1) is the flowchart of the virtual bridge device processing the incoming data from the inter-device interface according to a preferred embodiment of the system for Ethernet data frames access and transport over a SDH/SONET network of the present invention;
Fig.6 (F2) is the flowchart of the broadcasting sub-flow of the virtual bridge device processing the incoming data from the inter-device interface according to a preferred embodiment of the system for Ethernet data frames access and transport over a SDH/SONET network of the present invention;
Fig.6 (F3) is the flowchart of the multicasting sub-flow of the virtual bridge device processing the incoming data from the inter-device interface according to a preferred embodiment of the system for Ethernet data frames access and transport over a SDH/SONET network of the present invention;

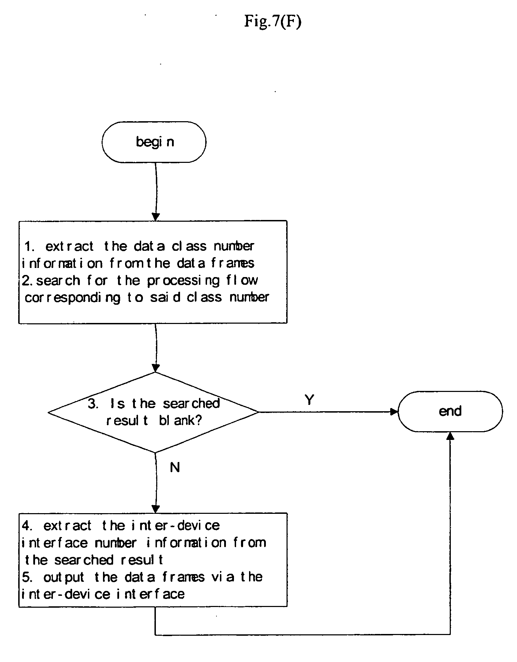

Fig.7 is the schematic block diagram of the data processing and dispatching device according to a preferred embodiment of the system for Ethernet data frames access and transport over a SDH/SONET network of the present invention;
Fig.7 (F) is the flowchart of the data processing and dispatching device processing the incoming data according to a preferred embodiment of the system for Ethernet data frames access and transport over a SDH/SONET network of the present invention;

### Detailed description of the Embodiments

To make the system and method of the present invention be better understood, the basic function of the devices is described first. Usually, any device has the following 3 functions:
(1) input function, i.e., receive information from external of the device;
(2) processing function, i.e., process said information received from external of the device;
(3) output function, i.e., output the processed information.

For a device accessing and transporting Ethernet data frames over a SDH/SONET network:
(1) input function: receive information from external of the device via the UNIs and the NNIs;
(2) output function: output the processed information via the UNIs and the NNIs;
(3) processing function: for a device accessing and transporting Ethernet data frames over a SDH/SONET network, different service abilities and service efficiencies depend on different solutions.

In addition, the phrase "standard Ethernet interface" used in the present invention means the following:

IEEE802.3 defines the LAN interface in detail; in the present invention, an interface under IEEE802.3 is regarded as a standard Ethernet interface.

The present invention will be described hereunder with reference to the drawings. For concision, components and units described in prior art will not be described in detail hereunder. And components and units described above will not be described in detail hereunder.

Fig.4 shows a system for different data frames access and transport over a SDH/SONET network, for different data frames access and transporting. The system comprises a plurality of UNIs designed to couple with the user's network; a plurality of NNIs designed to couple with said digital transport network to transport data; a plurality of mapping and de-mapping devices 10; a virtual interface device 80 coupled to said UNIs and coupled to said NNIs via said mapping and de-mapping devices 10; a data processing and dispatching device 90 coupled to said virtual interface device 80; a plurality of virtual private devices 120 and a virtual bridge device 100 and a PRP device 110 coupled to
said data processing and dispatching device. wherein, the plurality of mapping and de-mapping devices 10, the virtual interface device 80 and the data processing and dispatching device 90 constitute a data converting device of the present invention. The input to said system for different data frames access and transport over a digital transport network comprises: (1) data frames entering the device via the UNIs; (2) data frames entering the mapping and de-mapping devices via the NNIs. The data frames output from said system for different data frames access and transport over a digital transport network comprises: (1) data frames output to external of the device via the UNIs; (2) data frames output to external of the mapping and de-mapping device via the NNIs.

Fig.4 (F1) shows the processing steps for data frames entering the device via the UNIs according to the system for different data frames access and transport over a SDH/SONET network.
First, in step 1, the virtual interface device performs matching to the data frames according to classifying rules;
in step 2, the virtual interface device modifies the data frames according to classifying rules, i.e., inserts data class number in the data frames;
in step 3, the virtual interface device transfers the modified data frames to the data processing and dispatching device;
in step 4, the data processing and dispatching device finds a corresponding processing device according to the data class number in the data frames;
in step 5, the data processing and dispatching device transfers the data frames to the corresponding processing device; if the processing flow is that a virtual bridge device exchanges the data frames, it transfers to the virtual bridge device; if the corresponding processing device is the virtual interface device, goes to step 8;
in step 6, said corresponding processing device processes the data frames, and modifies the data class number at the end of the processing, and then transfers the modified data frames to the data processing and dispatching device;
in step 7, the system goes to step 4;
in step 8, the virtual interface device finds a corresponding device interface according to the data class number in the data frames;
in step 9, the virtual interface device modifies the data frames, i.e., deletes the data class number from the data frames;
in step 10, the virtual interface device outputs the modified data frames via a device interface (if the device interface is a NNI, mapping operation should be performed through the mapping and de-mapping devices before output).

The processing steps for data frames entering the device via the NNIs according to the system for different data frames access and transport over a SDH/SONET network are as follows:
in step 1, the mapping and de-mapping devices perform a de-mapping operation on the data frames;
in step 2, the rest processing steps are identical to those for data frames entering the device via the UNIs.

When implementing functions of the devices, the device manufacturers may partially or completely employ the above method. The device manufacturers may even treat the processing as firmware through fixing connections among the devices to omit the data processing and dispatching device.

Fig.6 is the schematic block diagram of the virtual bridge device according to a preferred embodiment of the system for Ethernet data frames access and transport over a SDH/SONET network of the present invention. The present invention overcomes the problem of limited Ethernet data frame address space with virtual bridge devices. A virtual bridge device may provide a plurality of virtual bridges. Each virtual bridge possesses all functions and properties of a bridge device. However, it differs from the bridge device in that the virtual bridge may be created and deleted dynamically. During operation of the device, the operator may create or delete a plurality of virtual bridges dynamically because each virtual bridge has an independent address space, the operator may provide VLAN services to users with different virtual bridges if that conflicts exists among address spaces.

The operator may configure a virtual bridge just like a physical bridge. The virtual bridge further expands the features of a bridge to support VMAN-based switching operation. A virtual bridge device comprises a virtual bridge processing unit 802, a multicasting database 856, a control interface unit, a forwarding database 852, and a virtual bridge database 854.

The virtual bridge processing unit has 3 major functions:
(a) detecting control messages, and transferring the control messages to the control system of the device via the control interface unit;
(b) learning addresses, and storing the knowledge acquired into the forwarding database;
(c) performing switching on data frames in non-control messages and modifying the data class information in the data frames.

The virtual bridge processing unit is the processing center of the device, and there are five items embedded in it:
(a) format of control messages;
(b) processing steps and logics for data frames;
(c) format of forwarding items in the forwarding database;
(d) format of multicasting items in the multicasting database;
(e) format of items in the virtual bridge database.

The virtual bridge database, the multicasting database, and the forwarding database are responsible for the processing action of the virtual bridge processing unit, and the items in the databases may be updated during operation of the device. The data formats of items in the multicasting database and the forwarding database are identical, and each item contains the following information:
(a) virtual bridge number;
(b) input port of virtual bridge;
(c) input destination address;
(d) input VLAN number;
(e) input VMAN number;
(f) output port of virtual bridge.

In the multicasting database, the database code is the combination of all fields; in the forwarding database, the database code is the combination of all fields except for the output port of virtual bridge.

Each item in the virtual bridge database contains the following information:
(a) input class number;
(b) virtual bridge number;
(c) port number;
(d) output class number.

Via the control interface, an external control system of the device may implement the following functions:
(a) performing adding, deleting, modifying, and searching operations on items in the above databases;
(b) monitoring the working status of the virtual bridge processing unit.

The virtual bridge device is connected with the data processing and dispatching device via the inter-device interface. The virtual bridge device is connected with the control system of the device via the control interface.

Fig.6 (F1) is the flowchart of the virtual bridge device processing the incoming data from the inter-device interface according to a preferred embodiment of the system for Ethernet data frames access and transport over a SDH/SONET network of the present invention. For data frames entering the device via the inter-device interface, the virtual bridge processing unit performs the following processing steps:
step 1: determining whether the data frames correspond to control messages; if not, going to step 3;
step 2: transporting the data frames to an external control system via the control interface unit, and then going to step 17;
step 3: extracting input data class number, destination address, source address, VLAN number, and VMAN number (optional) from a fixed position in the data frames;
step 4: searching in the virtual bridge database with the index of the extracted data class number;
step 5: determining the searched result; if it is blank, discarding said data frames and going to step 17;
step 6: exacting the virtual bridge number and port number information from the searched result;
step 7: learning the source address, and then updating the forwarding database according to the learning result;
step 8: determining whether the destination address is a multicasting address; if so, executing a multicasting sub-flow first, and then going to step 17;
step 9: determining whether the destination address is a broadcasting address, if so, executing a broadcasting sub-flow, and then going to step 17;
step 10: searching in the forwarding database with the index of virtual bridge number, input port, and destination address, VLAN number, and VMAN number (optional);
step 11: determining the searched result; if it is blank, executing a broadcasting sub-flow, and then going to step 17;
step 12: extracting the output port number from the searched result;
step 13: searching in the virtual bridge database with the index of the virtual bridge number and the output port number;
step 14: determining the searched result; if it is blank, discarding said data frames and going to step 17;
step 15: extracting the output class number from the searched result and modifying the data frames, i.e., replacing the class number in the data frames with the output data class number;
step 16: outputting the modified data frames via the inter-device interface;
step 17: ending.

Fig.6 (F2) is the flowchart of the broadcasting sub-flow of the virtual bridge device processing the incoming data from the inter-device interface according to a preferred embodiment of the system for Ethernet data frames access and transport over a SDH/SONET network of the present invention. The processing steps in the broadcasting sub-flow comprise:
step 1: searching for the first item corresponding to the virtual bridge in the virtual bridge database, with the keyword of virtual bridge number;
step 2: determining the searched result; if it is blank, discarding said data frames and going to step 7;
step 3: comparing the input class number in the searched result with the class number in the data frames; if they are equal to each other, going to step 6;
step 4: copying the data frames, extracting the output class number from the searched result, and modifying the copied data frames, i.e., replacing the class number in the copied data frames with the output class number;
step 5: outputting the modified copied data frames to the external of the device via the inter-device interface;
step 6: searching for the next item corresponding to the virtual bridge in the virtual bridge database, with the keyword of virtual bridge number, and going to step 2;
[50] step 7: ending the sub-flow.Fig.6 (F3) is the flowchart of the multicasting sub-flow of the virtual bridge device processing the incoming data from the inter-device interface according to a preferred embodiment of the system for Ethernet data frames access and transport over a SDH/SONET network of the present invention. The processing steps in the multicasting sub-flow comprise:
   step 1: searching for the first item corresponding to the keywords in the multicasting database, with the keywords of virtual bridge number, input port, destination address, VLAN number, VMAN number (optional);
   step 2: determining the searched result; if it is blank, discarding said data frames and going to step 9;
   step 3: comparing the output port number in the searched result with the extracted input port number (the input port number corresponding to the class number of data frames in the virtual bridge database); if they are equal to each other, going to step 8;
   step 4: searching in the virtual bridge database, with the keyword of virtual bridge number and output port number;
   step 5: determining the searched result; if it is blank, discarding said data frames and going to step 8;
   step 6: copying the data frames, extracting the output class number from the searched result, and modifying the modifying the copied data frames, i.e., replacing the class number in the copied data frames with the output class number;
   step 7: outputting the modified copied data frames to the external of the device via the inter-device interface;
   step 8: searching for the next item in the multicasting database, with the keywords of virtual bridge number, input port, destination address, VLAN number, VMAN number (optional), going to step 2;
   step 9: ending the sub-flow.

With the system and method of the present invention, integral VLAN services can be provided for users. The system and method of the present invention overcome the restriction on Ethernet data frame address space at UNIs. When a plurality of Ethernet data frames is sent to such a device of the network, there is no restriction on address space of Ethernet data frames.

With the system and method of the present invention, a device interface (UNI or NNI) can support both VLAN service and Ethernet data private service, and a plurality of Ethernet data frames from many users can be accessed and converged at a device interface, thus the accessing and converging capability of the device is enhanced greatly.

In the existing technical solutions and devices, the amount of bridge devices is certain; so conflicts among data frame address spaces of different users can be avoided only through restricting the data frame address spaces of users. Whereas the virtual bridge devices in the present invention can add virtual bridges dynamically, and the address space of each virtual bridge is independent; different virtual bridges correspond to different users; therefore, the present invention has no restriction to data frame address spaces of users.

In addition, data frames for different users can be isolated, transported and shared by adding a label before sending, changing the label during transport and removing the label at destination address, thus the virtual private device of the present invention is achieved.

## Claims

1. A system for different data frames access and transport over a digital transport network for accessing and transporting different data frames, comprising:
at least one User-Network Interface (20), which is used to couple with the user's network; and/or at least one Network-Network Interface (30), which is used to couple with said digital transport network to transmit data; and
a data converting device, which is coupled with said User-Network Interfaces (20) and said Network-Network Interfaces (30) to convert data formats between said User Network Interfaces (20), or data formats between said Network-Network Interfaces (30), or data formats between said Network-Network Interfaces (30) and said User-Network Interfaces (20);
wherein said data converting device comprises a virtual bridge device (100) and an interface device (80), said virtual bridge device (100) exchanges data frames between said User-Network Interfaces (20) and (Network-Network Interfaces (30) via said interface device, said virtual bridge device (100) is used to detect control messages and transfers the control messages to an external control system of the data converting device via a control interface unit, and to perform exchanging on data frames in non-control messages;
wherein said virtual bridge device (100) comprises: an inter-device interface, for inputting and outputting data frames; a virtual bridge processing unit (802), which is coupled to the inter-device interface to process data frames; databases (852, 854, 856), which store information corresponding to classes of data and are coupled to said virtual bridge processing unit (802) to process data frames according to said information; the control interface unit, which is coupled to said databases (852, 854, 856) and said virtual bridge processing unit (802), and used to control said virtual bridge processing unit (802) and said databases (852, 854, 856)
wherein said databases comprise a virtual bridge database (854), a multicasting database (856), and a forwarding database (852); said multicasting database (856) and said forwarding database (852) storing virtual bridge number, input port number of the virtual bridge, an input destination address, an input VLAN number, an input VMAN number, an output port number of the virtual bridge; said virtual bridge database (854) storing an input class number, a virtual bridge number, a port number and an output class number.

2. The system for different data frames access and transport over a digital transport network according to claim 1, wherein said data converting device comprises a data processing and dispatching device or a virtual interface device, said inter-device interface being connected with said data processing and dispatching device or said virtual interface device.

3. The system for different data frames access and transport over a digital transport network according to claim 1, wherein said control interface unit provides a control interface, performs adding, deleting, modifying, and searching operations on contents in said databases (852, 854, 856); and monitors the working status of the virtual bridge processing unit (802) via said control interface.

4. The system for different data frames access and transport over a digital transport network according to claim 1, wherein said virtual bridge processing unit (802) processes data frames according to fixed logics, controls the format of forwarding items in the forwarding database (852) and the format of multicasting items in the multicasting database (856), and controls the format of items in the virtual bridge database (854).

5. A method for data frames access and transport over a digital transport network using the system for different data frames access and transport over a digital transport network according to claim 1, said system comprising a virtual bridge device, said method comprising the following steps:
extracting an input data class number and a destination address from the data frames;
searching in the virtual bridge database (854) according to said class number for extracting the virtual bridge number and a virtual bridge port number;
switching the data frames according to the virtual bridge number, the virtual bridge port number and the destination address, thereby modifying the data frames, and sending data frames via the inter-device interface.

6. The method according to claim 5, wherein the step of extracting the input data class number, destination address from the data frames further comprises: extracting the input data source address and the VLAN number.

7. The method according to claim 5, further comprising:
learning the source address and updating the forwarding data base (852) according to the learning result; wherein the step of switching comprises:
searching in the forwarding database (852) with the index of the virtual bridge number, the virtual bridge input port number, destination address and VLAN number for extracting an output port number for the data frames;
executing a multicasting sub-flow when the destination address is a multicasting address; executing a broadcasting sub-flow when the destination address is a broadcasting address.

8. The method according to claim 7, wherein the step of modifying the data frames, and sending said data frames via the inter-device interface comprises:
searching in the virtual bridge database (854) with the index of the virtual bridge number and the extracted output port number for the data frames;
extracting an output class number from the search result and modifying the data frames by replacing the class number in the data frames with the output data class number;
outputting the modified data frames via the inter-device interface.

9. The method according to claim 7, wherein said broadcasting sub-flow comprises:
searching in the virtual bridge database (854) with the keyword of the virtual bridge number;
comparing the input class number in the search result with the class number in the data frames;
copying the data frames when the input class number in the search result is different from the class number in the data frames, extracting the output class number from the search result, and modifying the copied data frames by replacing the class number in the copied data frames with the output data class number;
and outputting the modified copied data frames via the inter-device interface.

10. The method according to claim 7, wherein said multicasting sub-flow comprises:
searching in the multicasting database (856) with the keywords of the virtual bridge number, the virtual bridge input port number, the destination address and the VLAN number;
comparing the output port number in the search result with the extracted input port number, i.e., the input port number corresponding to the class number of data frames in the virtual bridge database (854);
searching in the virtual bridge database (854) with the keywords of the virtual bridge number and output port number when the output port number is not equal to the extracted input port number; and
copying the data frames, extracting the output class number from the searched result, modifying the copied data frames by replacing the class number in the copied data frames with the output data class number, and outputting the modified copied data frames via the inter-device interface.

## Patentansprüche

1. System fiir den Zugriff auf und den Transport von verschiedenen Datenrahmen über ein digitales Transportnetz fiir das Zugreifen auf und den Transport von verschiedenen Datenrahmen, umfassend:
mindestens eine Benutzer-Netz-Schnittstelle (20), die verwendet wird, um mit dem Benutzernetz zu koppeln; und/oder mindestens eine Netz-Netz-Schnittstelle (30), die verwendet wird, um fiir das Senden von Daten mit dem digitalen Transportnetz zu koppeln; und
eine Datenkonvertierungseinrichtung, die mit den Benutzer-Netz-Schnittstellen (20) und den Netz-Netz-Schnittstellen (30) gekoppelt ist, um Datenformate zwischen den Benutzer-Netz-Schnittstellen (20) oder Datenformate zwischen den Netz-Netz-Schnittstellen (30) oder Datenformate zwischen den Netz-Netz-Schnittstellen (30) und den Benutzer-Netz-Schnittstellen (20) zu konvertieren;
wobei die Datenkonvertierungseinrichtung eine Virtuelle-Brücke-Einrichtung (100) und eine Schnittstelleneinrichtung (80) umfasst, wobei die Virtuelle-Brücke-Einrichtung (100) Datenrahmen zwischen den Benutzer-Netz-Schnittstellen (20) und Netz-Netz-Schnittstellen (30) über die Schnittstelleneinrichtung austauscht, wobei die Virtuelle-Brücke-Einrichtung (100) dazu verwendet wird, Steuernachrichten zu detektieren und die Steuernachrichten an ein externes Steuersystem der Datenkonvertierungseinrichtung über eine Steuerschnittstelleneinheit zu übertragen und das Austauschen an Datenrahmen in Nicht-Steuernachrichten auszuführen;
wobei die Virtuelle-Brücke-Einrichtung (100) Folgendes umfasst: eine Inter-Einrichtungs-Schnittstelle zum Eingeben und Ausgeben von Datenrahmen; eine Virtuelle-Brücke-Verarbeitungseinheit (802), die an die Inter-Einrichtungs-Schnittstelle gekoppelt ist, um Datenrahmen zu verarbeiten; Datenbanken (852, 854, 856), die Klassen von Daten entsprechende Informationen speichern und an die Virtuelle-Brücke-Verarbeitungseinheit (802) gekoppelt sind, um Datenrahmen entsprechend den Informationen zu verarbeiten; die Steuerschnittstelleneinheit, die an die Datenbanken (852, 854, 856) und die Virtuelle-Brücke-Verarbeitungseinheit (802) gekoppelt ist und dazu verwendet wird, die Virtuelle-Brücke-Verarbeitungseinheit (802) und die Datenbanken (852, 854, 856) zu steuern;
wobei die Datenbanken eine Virtuelle-Brücke-Datenbank (854), eine Multicasting-Datenbank (856) und eine Forwarding-Datenbank (852) umfassen; wobei die Multicasting-Datenbank (856) und die Forwarding-Datenbank (852) eine Virtuelle-Brücke-Nummer, eine Eingangsportnummer der virtuellen Brücke, eine Eingangszieladresse, eine Eingangs-VLAN-Nummer, eine Eingangs-VMAN-Nummer, eine Ausgangsportnummer der virtuellen Brücke speichern; wobei die Virtuelle-Brücke-Datenbank (854) eine Eingangsklassennummer, eine Virtuelle-Brücke-Nummer, eine Portnummer und eine Ausgangsklassennummer speichert.

2. System für den Zugriff auf und den Transport von verschiedenen Datenrahmen über ein digitales Transportnetz nach Anspruch 1, wobei die Datenkonvertierungseinrichtung eine Datenverarbeitungs- und Abfertigungseinrichtung oder eine virtuelle Schnittstelleneinrichtung umfasst, wobei die Inter-Einrichtungs-Schnittstelle mit der Datenverarbeitungs- und Abfertigungseinrichtung oder der virtuellen Schnittstelleneinrichtung verbunden ist.

3. System für den Zugriff auf und den Transport von verschiedenen Datenrahmen über ein digitales Transportnetz nach Anspruch 1, wobei die Steuerschnittstelleneinheit eine Steuerschnittstelle liefert, Hinzufügungs-, Lösch-, Modifizierungs- und Durchsuchvorgänge an Inhalten in den Datenbanken (852, 854, 856) durchführt und den Arbeitsstatus der Virtuelle-Brücke-Verarbeitungseinheit (802) über die Steuerschnittstelle überwacht.

4. System für den Zugriff auf und den Transport von verschiedenen Datenrahmen über ein digitales Transportnetz nach Anspruch 1, wobei die Virtuelle-Brücke-Verarbeitungseinheit (802) Datenrahmen entsprechend fester Logiken verarbeitet, das Format von weiterleitenden Elementen in der Forwarding-Datenbank (852) und das Format von rundsendenden Elementen in der Multicasting-Datenbank (856) steuert und das Format von Elementen in der Virtuelle-Brücke-Datenbank (854) steuert.

5. Verfahren für den Zugriff auf und den Transport von Datenrahmen über ein digitales Transportnetz unter Verwendung des Systems für den Zugriff auf und den Transport von verschiedenen Datenrahmen über ein digitales Transportnetz nach Anspruch 1, wobei das System eine Virtuelle-Brücke-Einrichtung umfasst, wobei das Verfahren die folgenden Schritte umfasst:
Extrahieren einer Eingangsdatenklassennummer und einer Zieladresse aus den Datenrahmen;
Suchen in der Virtuelle-Brücke-Datenbank (854) gemäß der Klassennummer zum Extrahieren der Virtuelle-Brücke-Nummer und einer Virtuelle-Brücke-Portnummer;
Umschalten der Datenrahmen gemäß der Virtuelle-Brücke-Nummer, der Virtuelle-Brücke-Portnummer und der Zieladresse, wodurch die Datenrahmen modifiziert werden, und Senden von Datenrahmen über die Inter-Einrichtungs-Schnittstelle.

6. Verfahren nach Anspruch 5, wobei der Schritt des Extrahierens der Eingangsdatenklassennummer, der Zieladresse aus dem Datenrahmen weiterhin Folgendes umfasst:
Extrahieren der Eingangsdatenquelladresse und der VLAN-Nummer.

7. Verfahren nach Anspruch 5, weiterhin umfassend:
Lernen der Quelladresse und Aktualisieren der Forwarding-Datenbank (852) gemäß dem Lernergebnis, wobei der Schritt des Umschaltens Folgendes umfasst:
Suchen in der Forwarding-Datenbank (852) mit dem Index der Virtuelle-Brücke-Nummer, dem Virtuelle-Brücke-Eingang, Portnummer, Zieladresse und VLAN-Nummer zum Extrahieren einer Ausgangsportnummer für die Datenrahmen;
Ausführen eines Multicasting-Teilstroms, wenn die Zieladresse eine Multicasting-Adresse ist; Ausführen eines Broadcasting-Teilstroms, wenn die Zieladresse eine Broadcasting-Adresse ist.

8. Verfahren nach Anspruch 7, wobei der Schritt des Modifizierens der Datenrahmen und des Sendens der Datenrahmen über die Inter-Einrichtungs-Schnittstelle Folgendes umfasst:
Suchen in der Virtuelle-Brücke-Datenbank (854) mit dem Index der Virtuelle-Brücke-Nummer und der extrahierten Ausgangsportnummer nach den Datenrahmen;
Extrahieren einer Ausgangsklassennummer aus dem Suchergebnis und Modifizieren der Datenrahmen durch Ersetzen der Klassennummer in den Datenrahmen mit der Ausgangsdatenklassennummer;
Ausgeben der modifizierten Datenrahmen über die Inter-Einrichtungs-Schnittstelle.

9. Verfahren nach Anspruch 7, wobei der Broadcasting-Teilstrom Folgendes umfasst:
Suchen in der Virtuelle-Brücke-Datenbank (854) mit dem Schlüsselwort der Virtuelle-Brücke-Nummer;
Vergleichen der Eingangsklassennummer in dem Suchergebnis mit der Klassennummer in den Datenrahmen;
Kopieren der Datenrahmen, wenn die Eingangsklassennummer in dem Suchergebnis von der Klassennummer in den Datenrahmen verschieden ist, Extrahieren der Ausgangsklassennummer aus dem Suchergebnis und Modifizieren der kopierten Datenrahmen durch Ersetzen der Klassennummer in den kopierten Datenrahmen durch die Ausgangsdatenklassennummer;
und Ausgeben der modifizierten kopierten Datenrahmen über die Inter-Einrichtungs-Schnittstelle.

10. Verfahren nach Anspruch 7, wobei der Multicasting-Teilstrom Folgendes umfasst:
Suchen in der Multicasting-Datenbank (856) mit den Schlüsselwörtern der Virtuelle-Brücke-Nummer, der Virtuelle-Brücke-Eingangsportnummer, der Zieladresse und der VLAN-Nummer;
Vergleichen der Ausgangsportnummer in dem Suchergebnis mit der extrahierten Eingangsportnummer, d.h. der Eingangsportnummer entsprechend der Klassennummer von Datenrahmen in der Virtuelle-Brücke-Datenbank (854);
Suchen in der Virtuelle-Brücke-Datenbank (854) mit den Schlüsselwörtern der Virtuelle-Brücke-Nummer und der Ausgangsportnummer, wenn die Ausgangsportnummer nicht gleich der extrahierten Eingangsportnummer ist; und
Kopieren der Datenrahmen, Extrahieren der Ausgangsklassennummer aus dem Suchergebnis, Modifizieren der kopierten Datenrahmen durch Ersetzen der Klassennummer in den kopierten Datenrahmen durch die Ausgangsdatenklassennummer und Ausgeben der modifizierten kopierten Datenrahmen über die Inter-Einrichtungs-Schnittstelle.

## Revendications

1. Système permettant l'accès à différentes trames de données et leur transport sur un réseau de transport numérique afin d'accéder à différentes trames de données et de les acheminer, comprenant :
au moins une interface utilisateur-réseau (20) qui est utilisée pour le couplage avec le réseau de l'utilisateur ; et/ou au moins une interface réseau-réseau (30) qui est utilisée pour le couplage avec ledit réseau de transport numérique pour transmettre des données ; et
un dispositif de conversion de données, qui est couplé auxdites interfaces utilisateur-réseau (20) et auxdites interfaces réseau-réseau (30) pour convertir des formats de données entre lesdites interfaces utilisateur-réseau (20), ou des formats de données entre lesdites interfaces réseau-réseau (30), ou des formats de données entre lesdites interfaces réseau-réseau (30) et lesdites interfaces utilisateur-réseau (20) ;
ledit dispositif de conversion de données comprenant un dispositif pont virtuel (100) et un dispositif d'interface (80), ledit dispositif pont virtuel (100) échangeant des trames de données entre lesdites interfaces utilisateur-réseau (20) et lesdites interfaces réseau-réseau (30) par l'intermédiaire dudit dispositif d'interface, ledit dispositif pont virtuel (100) servant à détecter des messages de contrôle et transférant les messages de contrôle vers un système de contrôle externe solidaire du dispositif de conversion de données par l'intermédiaire d'une unité interface de contrôle, et à effectuer l'échange sur des trames de données dans des messages de non-contrôle ;
ledit dispositif pont virtuel (100) englobant : une interface inter-dispositifs pour assurer l'entrée et la sortie de trames de données ; une unité de traitement de pont virtuel (802), laquelle est couplée à l'interface inter-dispositifs afin de traiter des trames de données ; des bases de données (852, 854, 856) qui stockent des informations correspondant à des classes de données et qui sont couplées à ladite unité de traitement de pont virtuel (802) afin de traiter les trames de données en fonction desdites informations ; l'unité interface de contrôle, qui est couplée auxdites bases de données (852, 854, 856) et à ladite unité de traitement de pont virtuel (802), et est utilisée pour contrôler ladite unité de traitement de pont virtuel (802) et lesdites bases de données (852, 854, 856)
lesdites bases de données englobant une base de données de pont virtuel (854), une base de données de multidestinataires (856) et une base de données pour l'aiguillage (852) ; ladite base de données de multidestinataires (856) et ladite base de données pour l'aiguillage (852) assurant le stockage du numéro de pont virtuel, du numéro de port d'entrée du pont virtuel, d'une adresse de destination d'entrée, d'un numéro de réseau local virtuel (VLAN) d'entrée, d'un numéro de réseau métropolitain virtuel (VMAN) d'entrée, d'un numéro de port de sortie du pont virtuel ; ladite base de données de pont virtuel (854) assurant le stockage d'un numéro de classe d'entrée, d'un numéro de pont virtuel, d'un numéro de port et d'un numéro de classe de sortie.

2. Système permettant l'accès à différentes trames de données et leur transport sur un réseau de transport numérique selon la revendication 1, ledit dispositif de conversion de données englobant un dispositif de répartition et de traitement de données ou un dispositif d'interface virtuelle, ladite interface inter-dispositifs étant connectée audit dispositif de répartition et de traitement de données ou audit dispositif d'interface virtuelle.

3. Système permettant l'accès à différentes trames de données et leur transport sur un réseau de transport numérique selon la revendication 1, ladite unité interface de contrôle procurant une interface de contrôle, effectuant des opérations d'adjonction, de suppression, de modification et de recherche sur les contenus présents dans lesdites bases de données (852, 854, 856) ; et supervisant l'état de fonctionnement de l'unité de traitement de pont virtuel (802) par l'intermédiaire de ladite interface de contrôle.

4. Système permettant l'accès à différentes trames de données et leur transport sur un réseau de transport numérique selon la revendication 1, ladite unité de traitement de pont virtuel (802) assurant le traitement des trames de données en fonction de logiques fixes, contrôlant le format des articles de réacheminement dans la base de données pour l'aiguillage (852) et le format des articles multidestinataires dans la base de données de multidestinataires (856), et contrôlant le format des articles dans la base de données de pont virtuel (854).

5. Procédé destiné à accéder à des trames de données et à les transporter sur un réseau de transport numérique faisant intervenir le système permettant l'accès à différentes trames de données et leur transport sur un réseau de transport numérique selon la revendication 1, ledit système comportant un dispositif de pont virtuel, ledit procédé comprenant les étapes suivantes consistant à :
extraire à partir des trames de données un numéro de classe de données d'entrée et une adresse de destination ;
faire une recherche dans la base de données de pont virtuel (854), en fonction dudit numéro de classe, pour extraire le numéro de pont virtuel et un numéro de port de pont virtuel ;
commuter les trames de données en fonction du numéro de pont virtuel, du numéro de port de pont virtuel et de l'adresse de destination, modifiant par conséquent les trames de données et envoyant les trames de données par l'intermédiaire de l'interface inter-dispositifs.

6. Procédé selon la revendication 5, l'étape d'extraction du numéro de classe de données d'entrée et de l'adresse de destination à partir des trames de données comprenant en outre l'opération consistant à : extraire l'adresse source des données d'entrée et le numéro de VLAN.

7. Procédé selon la revendication 5, comprenant en outre l'opération consistant à :
apprendre l'adresse source et mettre à jour la base de données pour l'aiguillage (852) en fonction du résultat de l'apprentissage ; l'étape de commutation englobant les opérations consistant à :
faire une recherche dans la base de données pour l'aiguillage (852) avec l'index du numéro de pont virtuel, l'entrée du pont virtuel, le numéro de port, l'adresse de destination et le numéro de VLAN afin d'extraire un numéro de port de sortie pour les trames de données ;
exécuter un flux secondaire de multidestinataires lorsque l'adresse de destination est une adresse de multidestinataires ; exécuter un flux secondaire de diffusion lorsque l'adresse de destination est une adresse de diffusion.

8. Procédé selon la revendication 7, l'étape de modification des trames de données et l'envoi desdites trames de données par l'intermédiaire de l'interface inter-dispositifs comprenant les opérations consistant à :
faire une recherche dans la base de données de pont virtuel (854) avec l'index du numéro de pont virtuel et le numéro de port de sortie ayant été extrait pour les trames de données ;
extraire un numéro de classe de sortie à partir du résultat de la recherche et modifier les trames de données en remplaçant le numéro de classe dans les trames de données par le numéro de classe des données de sortie ;
délivrer les trames de données modifiées par l'intermédiaire de l'interface inter-dispositifs.

9. Procédé selon la revendication 7, ledit flux secondaire de diffusion comprenant les opérations consistant à :
faire une recherche dans la base de données de pont virtuel (854) avec le mot-clé du numéro de pont virtuel ;
comparer le numéro de classe d'entrée dans le résultat de la recherche au numéro de classe présent dans les trames de données ;
copier les trames de données lorsque le numéro de classe d'entrée dans le résultat de la recherche est différent du numéro de classe présent dans les trames de données,
extraire le numéro de classe de sortie à partir du résultat de la recherche, et modifier les trames de données ayant été copiées en remplaçant le numéro de classe dans les trames de données copiées par le numéro de classe des données de sortie ;
et délivrer les trames de données copiées et modifiées par l'intermédiaire de l'interface inter-dispositifs.

10. Procédé selon la revendication 7, ledit flux secondaire de multidestinataires comprenant les opérations consistant à :
faire une recherche dans la base de données de multidestinataires (856) avec les mots-clés du numéro de pont virtuel, le numéro de port d'entrée de pont virtuel, l'adresse de destination et le numéro de VLAN ;
comparer le numéro de port de sortie dans le résultat de la recherche au numéro de port d'entrée ayant été extrait, c'est-à-dire le numéro de port d'entrée qui correspond au numéro de classe des trames de données dans la base de données de pont virtuel (854) ;
faire une recherche dans la base de données de pont virtuel (854) avec les mots-clés du numéro de pont virtuel et le numéro de port de sortie lorsque le numéro de port de sortie n'est pas égal au numéro de port d'entrée ayant été extrait ; et
copier les trames de données, extraire le numéro de classe de sortie à partir du résultat recherché, modifier les trames de données ayant été copiées en remplaçant le numéro de classe dans les trames de données copiées par le numéro de classe des données de sortie, et délivrer les trames de données copiées et modifiées par l'intermédiaire de l'interface inter-dispositifs.
